# EUROPÄISCHE PATENTSCHRIFT

(11) **EP 3 624 212 B1**
(45) Veröffentlichungstag und Bekanntmachung des Hinweises auf die Patenterteilung: **19.07.2023**
(21) Anmeldenummer: 18194901.7
(22) Anmeldetag: 17.09.2018
(51) Int. Cl.: H05K 5/06, H01M 50/24, H01M 50/244, H01M 50/247

(54) **AKKUPACK**
BATTERY PACK
BLOC BATTERIE

(43) Veröffentlichungstag der Anmeldung: 18.03.2020
(73) Patentinhaber: Andreas Stihl AG & Co. KG, 71336 Waiblingen (DE)
(72) Erfinder: Wagner, Daniel, 73650 Winterbach (DE); Herrmann, Markus, 70736 Fellbach (DE); Nordmann, Alexander, 70437 Stuttgart (DE); Kolb, Joachim, 71638 Ludwigsburg (DE)
(74) Vertreter: Patentanwälte Ruff, Wilhelm, Beier, Dauster & Partner mbB

(56) Entgegenhaltungen:
- EP-A1- 2 421 067
- DE-A1-102015 008 608

## Beschreibung

Die Erfindung bezieht sich auf einen Akkupack zur elektrischen Energieversorgung handgeführter Elektrogeräte, insbesondere elektrisch angetriebener Garten- und Forstbearbeitungsgeräte, wobei der Akkupack zur wahlweisen Benutzung in einer vertikalen, insbesondere rückengetragenen, Gebrauchslage und horizontalen, insbesondere geräteangedockten, Gebrauchslage eingerichtet ist. Er beinhaltet ein Außengehäuse, das eine Gehäusebasis und eine mit dieser verbundene Gehäusehaube beinhaltet und einen Innenraum umgibt, und einen im Innenraum angeordneten Akkuzellenblock. Die Erfindung bezieht sich außerdem auf ein Geräteset mit einem solchen Akkupack.

Unter handgeführten Elektrogeräten sind vorliegend vor allem Elektrogeräte zu verstehen, die handgetragen oder bodengeführt sind, insbesondere solche, die der Garten- und/oder Forstbearbeitung dienen, wie Motorsägen, Heckenscheren, Laubblasgeräte, Kehrgeräte, Rasenmäher und Vertikutierer, um nur stellvertretend einige Anwendungsbeispiele zu nennen. Je nach Systemausführung ist der Akkupack dafür ausgelegt, direkt mechanisch am Elektrogerät gehalten oder mittels eines entsprechenden Rückentragsystems vom Benutzer auf dem Rücken getragen zu werden. In entsprechenden Ausführungen bzw. Anwendungen ist der Akkupack elektrisch und mechanisch direkt an das Elektrogerät angekoppelt, ohne vom Benutzer getragen zu werden, oder der Akkupack und das Elektrogerät werden vom Benutzer mittels Rückentragsystem getragen oder der Benutzer trägt nur den Akkupack auf dem Rücken und das Elektrogerät ist hiervon mechanisch entkoppelt und elektrisch vorzugsweise drahtgebunden mit dem Akkupack verbunden. Der Akkupack sorgt für die elektrische Energie, die das Elektrogerät im Gebrauch benötigt, wozu er im Akkuzellenblock geeignete Akkuzellen besitzt, worunter vorliegend beliebige herkömmliche Akkumulator- bzw. Batteriezellen zu verstehen sind.

Der vorliegend betrachtete Akkupack eignet sich für mehrere dieser unterschiedlichen Verwendungen dadurch, dass er wahlweise in einer vertikalen Gebrauchslage und einer horizontalen Gebrauchslage benutzt werden kann. Mit der Lagecharakterisierung als vertikal ist vorliegend eine aufrechte Gebrauchslage des Akkupacks gemeint, worunter nicht nur eine exakt vertikale Lage, d.h. ein im Wesentlichen vertikaler Verlauf einer entsprechenden Längsebene des Akkupacks, zu verstehen ist, sondern auch demgegenüber geneigte Gebrauchslagen, bei denen der Akkupack mit seiner Längsebene einen spitzen Winkel bis zu 45° zur Vertikalen einschließt. Analog umfasst die horizontale Gebrauchslage vorliegend alle Gebrauchslagen, bei denen eine entsprechende Querebene des Akkupacks horizontal verläuft oder einen spitzen Winkel von höchstens 45° mit der Horizontalen einschließt. Üblicherweise befindet sich der Akkupack in vertikaler Gebrauchslage, wenn er vom Benutzer auf dem Rücken getragen wird, selten in horizontaler Gebrauchslage. Umgekehrt befindet sich der Akkupack meist in horizontaler Gebrauchslage, wenn er nicht vom Benutzer getragen direkt an das Elektrogerät angedockt ist, selten in vertikaler Gebrauchslage. So ist ein in der Offenlegungsschrift EP 2 819 207 A1 offenbarter Akkupack der eingangs genannten Art dafür ausgelegt, wahlweise in einer vertikalen, rückengetragenen Gebrauchslage und einer horizontalen, geräteangedockten Gebrauchslage benutzt werden zu können.

Bekanntermaßen kann es zu Schädigungen oder einem Funktionsausfall des Akkupacks und insbesondere seiner elektrischen Komponenten kommen, wenn Wasser bzw. Feuchtigkeit in den Innenraum des Akkupacks dringt oder sich im Innenraum durch Kondensation lokal Wasser bildet. Es besteht daher Bedarf, insbesondere die wasser- bzw. feuchteempfindlichen Komponenten des Akkupacks, wie den Akkuzellenblock und zugehörige periphere elektrische Komponenten, vor derartigen Wasser-/Feuchtigkeitseinflüssen zu schützen.

Die Patentschrift US 9.893.329 B2 und die Offenlegungsschrift DE 10 2015 008 608 A1 offenbaren einen in vertikaler Gebrauchslage rückengetragenen Akkupack, bei dem der Akkuzellenblock im Innenraum des Außengehäuses von einem wasserdichten Innengehäuse umschlossen ist. Dies soll verhindern, dass Wasser in den Akkuzellenblock gelangt. Die Gehäusehaube und die Gehäusebasis bilden bei diesem Akkupack zwei Gehäuseschalenhälften, die über den gesamten Umfang hinweg längs einer Mittenebene gegeneinander anliegen. Um Wasser, das sich eventuell im Innenraum zwischen dem wasserdichten Innengehäuse und dem Außengehäuse befindet, nach außen ableiten zu können, sind in der Gehäusebasis und in der Gehäusehaube jeweils in einem Unterseitenabschnitt derselben Wasserauslauföffnungen in paariger, zueinander versetzter Zuordnung sowie ein das jeweilige Paar von Wasserauslassöffnungen verbindender Wasserableitkanal mit einem Z-förmigen Verlauf gebildet.

Die Offenlegungsschriften US 2012/0045667 A1 und EP 2 421 067 A1 bezeichnen es als schwierig, in einem Akkupack eine vollständig wasserdichte Struktur zu realisieren und schlagen stattdessen für einen in horizontaler Gebrauchslage vorzugsweise an ein Akkuwerkzeug anzukoppelnden Akkupack vor, die Gehäuseunterseite mit einfachen Wasserauslassöffnungen zu versehen.

Die Offenlegungsschrift US 2013/0224539 A1 offenbart für einen ähnlichen Akkupack eine komplexere Wasserableitstruktur mit gehäuseunterseitigen Wasserauslassöffnungen, wobei die Wasserableitstruktur speziell zwischen zwei elektrischen Anschlusselementen für je eine Elektrode der Akkuzellen des Akkuzellenblocks angeordnet ist und zusätzlich eine spezielle Profilgestaltung der Wasserauslassöffnungen sowie zu den Wasserauslassöffnungen führende, wasserleitende Wandstrukturen beinhalten kann.

Der Erfindung liegt als technisches Problem die Bereitstellung eines Akkupacks der eingangs genannten Art mit gegenüber dem oben erwähnten Stand der Technik vorteilhaftem Schutz gegen Feuchtigkeits-/Wassereinflüsse sowie eines Gerätesets mit einem solchen Akkupack zugrunde.

Die Erfindung löst dieses Problem durch die Bereitstellung eines Akkupacks mit den Merkmalen des Anspruchs 1 und eines Gerätesets mit den Merkmalen des Anspruchs 12 oder 13.

Der erfindungsgemäße Akkupack besitzt eine Wasserableitstruktur zum Ableiten von im Innenraum befindlichem Wasser und/oder von Wasser, das von außen in das Gehäuse dringt. Auf diese Weise besitzt der Akkupack einen vorteilhaften Schutz gegen Feuchtigkeits-/Wassereinflüsse insbesondere dadurch, dass die Wasserableitstruktur mit relativ geringem Aufwand verhindert, dass Wasser bzw. Feuchtigkeit in unerwünschter Menge in den Innenraum, in welchem sich der Akkuzellenblock befindet, gelangen oder in diesem verbleiben kann. Dies schützt vor allem auch den Akkuzellenblock vor entsprechenden Schädigungs-/Ausfallgefahren durch eingedrungenes Wasser bzw. eingedrungene Feuchtigkeit. Die Wasserableitstruktur ist für diesen Zweck spezifisch ausgeführt.

Gemäß einem Aspekt der Erfindung beinhaltet die Wasserableitstruktur an wenigstens einer Seite des Außengehäuses eine flüssigkeitsoffene Doppellabyrinth-Wandstruktur mit einer äußeren Labyrinth-Wandstruktur, die durch Überlappung jeweils einer äußeren Seitenwandung der Gehäusebasis und der Gehäusehaube gebildet ist, und einer gegenüber der äußeren Labyrinth-Wandstruktur in Richtung Innenraum und quer dazu versetzt angeordneten inneren Labyrinth-Wandstruktur, die durch Überlappung jeweils einer inneren Seitenwandung der Gehäusebasis und der Gehäusehaube gebildet ist. Der Labyrinth-Verlauf dieser beiden Wandstrukturen und deren querversetzte Anordnung bietet einen hohen Schutz gegen direkt an der betreffenden Gehäuseseite von außen auf den Akkupack auftreffendes Wasser. Gleichzeitig ermöglicht die flüssigkeitsoffene Ausführung dieser Wandstrukturen ein Abführen bzw. Ableiten von eventuell in den Innenraum eingedrungenem oder durch kondensierte Feuchtigkeit gebildetem Wasser sowie von etwaiger Feuchtigkeit im Innenraum nach außen in die Umgebung außerhalb des Akkupacks. Bei der mit dieser Doppellabyrinth-Wandstruktur versehenen Gehäuseseite kann es sich um eine beliebige Seite des Außengehäuses des Akkupacks handeln, z.B. um eine in einer vertikalen Gebrauchslage längsseitige Gehäuseseite. Weiter versteht sich, dass je nach Bedarf mehrere bis hin zu allen Seiten des Akkupack-Außengehäuses eine solche flüssigkeitsoffene Doppellabyrinth-Wandstruktur besitzen können.

Gemäß einem weiteren Aspekt der Erfindung beinhaltet die Wasserableitstruktur eine flüssigkeitsoffene Labyrinth-Wandstruktur, die in der vertikalen oder der horizontalen Gebrauchslage des Akkupacks in Richtung nach unten und außen führend zwischen einem auf der Seite der Gehäusebasis angeordneten elektrischen Steckanschlusskörper und einem korrespondierenden Geräteanschlussstecker in Einstecklage gebildet ist. Diese Maßnahme bietet speziell einen Schutz der elektrischen Verbindung, die zwischen dem Akkupack und einem von diesem elektrisch versorgten Elektrogerät besteht, wenn der Geräteanschlussstecker des Elektrogeräts in den Steckanschlusskörper eingesteckt ist, der sich am Akkupack auf der Seite der Gehäusebasis des Akkupack-Außengehäuses befindet. In der vorliegenden vertikalen oder horizontalen Gebrauchslage des Akkupacks kann Wasser bzw. Feuchtigkeit, das/die eventuell in diesen Steckverbindungsbereich eindringt, über die flüssigkeitsoffene Labyrinth-Wandstruktur abgeleitet bzw. abgeführt werden, so dass die elektrische Verbindung nicht durch dort verbleibendes Wasser bzw. verbleibende Feuchtigkeit gestört wird.

In einer Weiterbildung der Erfindung beinhaltet die Wasserableitstruktur eine Ableitwandstruktur, die eine Gehäusewandstruktur eines im Innenraum angeordneten Bauteil umfasst, wobei die Gehäusewandstruktur in der vertikalen oder in der horizontalen Gebrauchslage des Akkupacks oberseitige Gehäusewandteile beinhaltet, die von einer Trennlinie in Richtung nach unten und außen verlaufen. Dies erhöht speziell für dieses Bauteil den Schutz vor eindringendem Wasser bzw. eindringender Feuchtigkeit an der Seite des Bauteils, die in der vertikalen oder der horizontalen Gebrauchslage des Akkupacks die Oberseite des Bauteils bildet. Dort von außen auf das Bauteil treffendes Wasser wird durch die genannten Gehäusewandteile nach unten und außen abgeleitet, so dass das Bauteil gegen eindringendes Wasser längs der Trennlinie der Gehäusewandteile geschützt ist. Bei dem Bauteil kann es sich insbesondere um ein feuchtigkeits- bzw. wasserempfindliches, gehaustes Bauteil handeln, wie einem elektrischen Bauteil des Akkupacks.

In einer Weiterbildung der Erfindung ist die innere Labyrinth-Wandstruktur gegenüber der äußeren Labyrinth-Wandstruktur zusätzlich in einer Querrichtung versetzt angeordnet, die senkrecht zu der zum Innenraum hin weisenden Versatzrichtung ist. Dies trägt zur weiteren Steigerung des Feuchtigkeitsschutzes durch die Doppellabyrinth-Wandstruktur bei.

In einer Weiterbildung der Erfindung weist der Akkupack an seiner in der vertikalen Gebrauchslage oberen Seite ein Griffteil auf, das mittels einer Nutverbindung, die als Wassereindringsperre ausgeführt ist, mit der Gehäusebasis und/oder der Gehäusehaube verbunden ist. Das Griffteil ist für die Handhabung des Akkupacks von Vorteil und die Ausführung des Griffteils als ein eigenes Bauteil separat von der Gehäusebasis und/oder der Gehäusehaube ist konstruktiv günstig und erlaubt bei Bedarf durch lösbare Ausführung der Nutverbindung ein Abnehmen des Griffteils von der Gehäusebasis bzw. der Gehäusehaube. Die Ausführung der Nutverbindung als Wassereindringsperre verhindert an dieser Stelle ein unerwünschtes Eindringen von Wasser bzw. Feuchtigkeit von außerhalb des Akkupacks in dessen Innenraum.

In einer Weiterbildung der Erfindung beinhaltet der Akkupack einen Bedienfeldplatinenkörper und einen Kontaktplattenkörper, und die Wasserableitstruktur weist eine flüssigkeitsoffene Labyrinth-Wandstruktur auf, die zwischen dem Bedienfeldplatinenkörper und dem Kontaktplattenkörper gebildet ist. Dies stellt speziell einen Schutz dieser elektrischen Bauteile, die sich typischerweise im Innenraum des Akkupacks befinden, gegen ein Eindringen von Wasser an dieser Stelle in den Bereich zwischen diesen beiden elektrischen Bauteilen dar. Gleichzeitig ermöglicht die flüssigkeitsoffene Ausführung dieser Labyrinth-Wandstruktur, dass dort eventuell vorliegendes Wasser aus diesem Bereich abgeleitet bzw. abgeführt werden kann.

In einer Weiterbildung der Erfindung beinhaltet die Gehäusebasis eine in der vertikalen Gebrauchslage des Akkupacks untere Bodenwandung, und die Wasserableitstruktur weist eine oder mehrere aus dem Innenraum nach außen führende Wasserauslassöffnungen in dieser Bodenwandung auf. Mit dieser Maßnahme kann eventuell in den Innenraum des Akkupacks eingedrungenes Wasser in der vertikalen Gebrauchslage des Akkupacks sehr einfach über die Wasserauslassöffnungen in der Bodenwandung nach außen abgeführt werden.

In einer Weiterbildung der Erfindung beinhaltet die Gehäusebasis eine in der vertikalen Gebrauchslage des Akkupacks rückseitige und in der horizontalen Gebrauchslage des Akkupacks untere Rückwandung, wobei die Rückwandung in der horizontalen Gebrauchslage nach unten geneigt verläuft. Die Wasserableitstruktur weist eine oder mehrere aus dem Innenraum nach außen führende Wasserauslassöffnungen in dieser Rückwandung an ihrem in der horizontalen Gebrauchslage nach unten geneigten Endbereich auf. Dies ermöglicht in günstiger Weise ein Abführen von ggf. in den Innenraum eingedrungenem oder dort gebildetem Wasser nach au-βen, wenn sich der Akkupack in der horizontalen Gebrauchslage befindet, und vermeidet, dass in dieser Gebrauchslage des Akkupacks unerwünscht viel Wasser im Innenraum verbleiben kann.

In einer Weiterbildung der Erfindung beinhaltet der Akkupack einen elektrischen Steckanschlusskörper mit einem Kontaktbuchsenkörper, und die Wasserableitstruktur weist eine oder mehrere Wasserableitöffnungen in dem Kontaktbuchsenkörper auf. Dies ermöglicht ein Ableiten von Wasser, das eventuell in den Bereich des Kontaktbuchsenkörpers gelangt ist, und schützt dementsprechend den elektrischen Kontakt, der mit dem Steckanschlusskörper bewirkt werden soll, beispielsweise durch Einstecken eines Anschlusssteckers eines anzuschließenden Elektrogerätes.

In einer Weiterbildung der Erfindung beinhaltet der Akkupack eine durch das Außengehäuse durchführende, flüssigkeitsdichte elektrische Leitungsdurchführung, die eine Durchführungsöffnung mit gestuftem Querschnitt im Außengehäuse und einen Durchführungsstopfen mit einem Tannenbaumprofil aufweist. Das Einbringen des Durchführungsstopfens mit seinem Tannenbaumprofil in die Durchführungsöffnung mit deren gestuftem Querschnitt stellt die gewünschte elektrische Leitungsdurchführung in flüssigkeitsdichter Ausführung her. Dies vermeidet ein Eindringen von Wasser bzw. Feuchtigkeit an dieser Stelle vom Außenraum durch das Außengehäuse des Akkupacks hindurch in den Innenraum.

In einer Weiterbildung der Erfindung ist bei mindestens einer der beiden Labyrinth-Wandstrukturen der Doppellabyrinth-Wandstruktur eine Überlappungslänge der beiden beteiligten Seitenwandungen größer als eine dazu senkrechte Überlappungsbreite und/oder beteiligten Seitenwandungen überlappen einander mit gleichbleibender Wanddicke. Dies trägt in konstruktiv vorteilhafter Weise zum Feuchtigkeitsschutz bei.

Das erfindungsgemäße Geräteset umfasst den erfindungsgemäßen Akkupack sowie ein handgeführtes Elektrogerät und/oder eine Rückentragvorrichtung. Das Elektrogerät kann mittels einer zugehörigen Koppeleinheit mindestens elektrisch und optional zusätzlich mechanisch an den Akkupack gekoppelt werden. Bei dem Elektrogerät kann es sich insbesondere um ein elektrisch angetriebenes Garten- oder Forstbearbeitungsgerät handeln. Zur mindestens mechanischen Kopplung des Akkupacks und der Rückentragvorrichtung dient analog eine zugehörige Koppeleinheit, die optional zusätzlich für eine elektrische Kopplung von Akkupack und Rückentragvorrichtung ausgelegt ist. In letzterem Fall kann das Elektrogerät elektrisch an die Rückentragvorrichtung angekoppelt werden. Je nach Bedarf und Anwendungsfall umfasst das Geräteset außer dem Akkupack nur das Elektrogerät mit zugehöriger Koppeleinheit oder nur die Rückentragvorrichtung mit zugehöriger Koppeleinheit oder sowohl das Elektrogerät mit zugehöriger Koppeleinheit als auch die Rückentragvorrichtung mit zugehöriger Koppeleinheit.

Vorteilhafte Ausführungsbeispiele der Erfindung sind in den Zeichnungen dargestellt. Diese und weitere vorteilhafte Ausführungsformen der Erfindung werden nachfolgend näher beschrieben. Hierbei zeigen:
- Fig. 1: eine schematische Perspektivansicht eines Akkupacks mit schematisch wiedergegebenen Gebrauchslagen,
- Fig. 2: eine perspektivische Draufsicht auf die Innenseite einer Gehäusebasis des Akkupacks,
- Fig. 3: eine perspektivische Draufsicht auf die Innenseite einer Gehäusehaube des Akkupacks,
- Fig. 4: ein Ausschnitt einer perspektivischen Querschnittansicht des Akkupacks,
- Fig. 5: eine Detailansicht eines Bereichs V von Fig. 4,
- Fig. 6: ein Ausschnitt einer Längsschnittansicht eines in vertikaler Gebrauchslage oberen Bereichs des Akkupacks,
- Fig. 7: eine Perspektivansicht des in vertikaler Gebrauchslage oberen Bereichs des Akkupacks,
- Fig. 8: ein Ausschnitt einer perspektivischen Längsschnittansicht eines elektrischen Steckanschlussbereichs des Akkupacks,
- Fig. 9: ein Ausschnitt einer Längsschnittansicht eines in vertikaler Gebrauchslage oberen, seitlichen Bereichs des Akkupacks,
- Fig. 10: ein Ausschnitt einer Querschnittansicht des Akkupacks im Bereich einer elektrischen Bauteilgruppe,
- Fig. 11: eine perspektivische Draufsicht auf eine in vertikaler Gebrauchslage untere Seite des Akkupacks,
- Fig. 12: ein Ausschnitt einer perspektivischen Draufsicht auf die Gehäusebasis in einem in horizontaler Gebrauchslage unteren Seitenbereich,
- Fig. 13: ein Ausschnitt einer Perspektivansicht einer elektrischen Steckanschlussgruppe des Akkupacks,
- Fig. 14: ein Ausschnitt einer Perspektivansicht der Gehäusehaube im Bereich einer Leitungsdurchführung,
- Fig. 15: eine Detailschnittansicht des Bereichs der Leitungsdurchführung von Fig. 14,
- Fig. 16: eine Perspektivansicht einer elektrischen Bauteilgruppe des Akkupacks von hinten,
- Fig. 17: ein Ausschnitt einer Perspektivansicht einer elektrischen Bedienfeldgruppe des Ackupacks,
- Fig. 18: ein Ausschnitt einer Längsschnittansicht der Bedienfeldgruppe von Fig. 17 und
- Fig. 19: eine schematische Blockdiagrammdarstellung eines Gerätsets mit Akkupack.

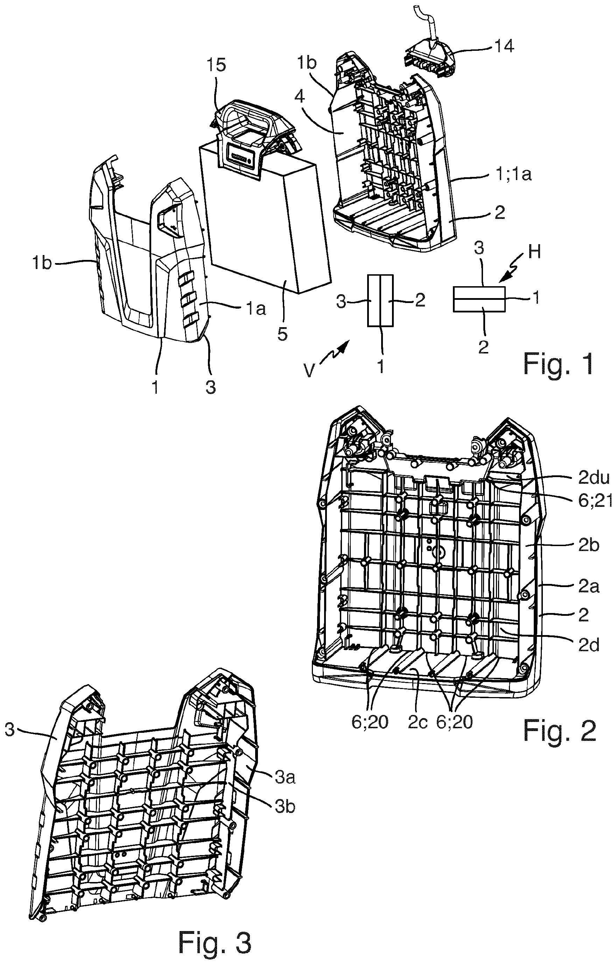

Der in den Figuren 1 bis 18 in verschiedenen Darstellungen veranschaulichte Akkupack dient zur elektrischen Energieversorgung handgeführter Elektrogeräte, insbesondere elektrisch angetriebener Garten- und/oder Forstbearbeitungsgeräte, und ist zur wahlweisen Benutzung in einer vertikalen Gebrauchslage V oder einer horizontalen Gebrauchslage H eingerichtet, wie in den zugehörigen schematischen Teilbildern von Fig. 1 angedeutet. Der Akkupack beinhaltet ein Au-βengehäuse 1, das eine Gehäusebasis 2 und eine mit dieser verbundene Gehäusehaube 3 aufweist und einen Innenraum 4 umgibt. Im Innenraum ist ein nur schematisch gezeigter Ackuzellenblock 5 angeordnet. Der Akkuzellenblock 5 ist von irgendeiner der bekannten herkömmlichen Bauarten, was hier nicht weiter von Interesse ist und daher keiner weiteren Erläuterungen bedarf. Der Akkupack besitzt außerdem eine Wasserableitstruktur 6 zum Ableiten von im Innenraum 4 befindlichem Wasser und/oder von Wasser, das von außen in das Außengehäuse 1 dringt.

Im gezeigten Beispiel besitzt der Akkupack eine grob quaderförmige Gestalt, wobei er in der vertikalen Gebrauchslage V eine stehende Lage einnimmt, d.h. die Oberseite und die Unterseite des Akkupacks sind in dieser Lage von zwei Quader-Schmalseiten gebildet, während er in der horizontalen Gebrauchslage H eine liegende Position einnimmt, d.h. die beiden Quader-Hauptseiten bilden dann die Oberseite bzw. Unterseite. Soweit im Folgenden nichts anderes gesagt, wird bezüglich der Lagerichtungen auf die stehende, vertikale Gebrauchslage V Bezug genommen. Die vertikale Gebrauchslage V ist typischerweise diejenige, in der sich der Akkupack befindet, wenn er vom Benutzer auf dem Rücken getragen wird, insbesondere mittels eines zugehörigen Rückentragsystems. Wenn der Akkupack an ein von ihm elektrisch zu speisendes Elektrogerät angedockt ist, befindet er sich meist in der horizontalen Gebrauchslage H am Elektrogerät, in manchen Fällen alternativ in der vertikalen Gebrauchslage V oder in noch einer anderen Lageorientierung. Analog kann sich der Akkupack in manchen Fällen alternativ in der horizontalen Gebrauchslage H oder in irgendeiner anderen von der vertikalen Gebrauchslage V verschiedenen Lageorientierung befinden, wenn er vom Benutzer auf dem Rücken getragen wird.

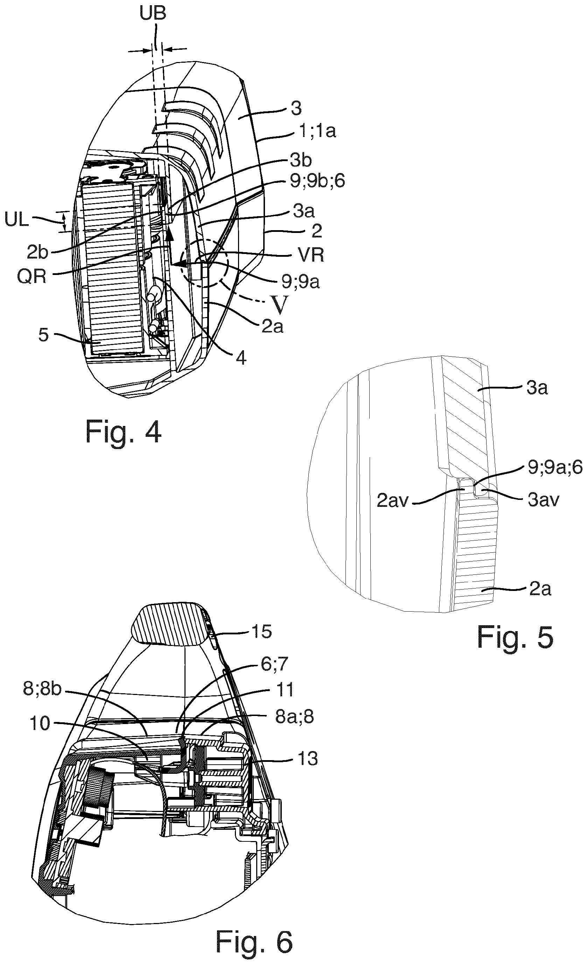

In entsprechenden Ausführungen beinhaltet die Wasserableitstruktur 6 wie gezeigt an wenigstens einer Seite des Außengehäuses 1 eine flüssigkeitsoffene Doppellabyrinth-Wandstruktur 9, z.B. an einer ersten, in der vertikalen Gebrauchslage V seitlichen, vertikalen Längsseite 1a, wie in den Fig. 4 und 5 zu erkennen, und/oder an einer gegenüberliegenden zweiten, in der vertikalen Gebrauchslage V seitlichen, vertikalen Längsseite 1b. Die Doppellabyrinth-Wandstruktur 9 umfasst eine äußere Labyrinth-Wandstruktur 9a und eine innere Labyrinth-Wandstruktur 9b, wobei die innere Labyrinth-Wandstruktur 9b gegenüber der äußeren Labyrinth-Wandstruktur 9a in einer zum Innenraum hin weisenden Richtung VR versetzt angeordnet ist. Die äußere Labyrinth-Wandstruktur 9a ist durch Überlappung einer äußeren Seitenwandung 2a der Gehäusebasis 2 mit einer äußeren Seitenwandung 3a der Gehäusehaube 3 gebildet. Die innere Labyrinth-Wandstruktur 9b ist durch Überlappung einer inneren Seitenwandung 2b der Gehäusebasis 2 mit einer inneren Seitenwandung 3b der Gehäusehaube 3 gebildet.

Diese flüssigkeitsoffene Doppellabyrinth-Wandstruktur 9 ermöglicht einerseits, dass der Wassereintrag in den Akkupack von außen gering gehalten werden kann, und andererseits, dass eingedrungenes Wasser oder im Innenraum 4 des Akkupacks vorhandene Feuchtigkeit oder durch Kondensation gebildetes Wasser nach unten bzw. außen abfließen kann, so dass der Akkuzellenblock 5 im Innenraum 4 vor Feuchteschäden geschützt ist.

In entsprechenden Ausführungen ist wie beim gezeigten Ausführungsbeispiel die innere Labyrinth-Wandstruktur 9b gegenüber der äußeren Labyrinth-Wandstruktur 9a zusätzlich in einer Querrichtung QR versetzt angeordnet, wobei die Querrichtung QR senkrecht zu der zum Innenraum hin weisenden Richtung VR ist. Vorzugsweise ist diese Querrichtung QR zudem senkrecht zu einer Richtung, in welcher die Doppellabyrinth-Wandstruktur 9 verläuft, d.h. senkrecht zum Verlauf einer Trennlinie zwischen der Gehäusebasis 2 und der Gehäusehaube 3 in diesem Bereich. Diese Maßnahme kann die Effizienz des Feuchteschutzes der Doppellabyrinth-Wandstruktur 9 merklich steigern. In alternativen Ausführungen liegen sich die beiden Labyrinth-Wandstrukturen 9a, 9b ohne derartigen Querversatz gegenüber.

Vorzugsweise besitzt mindestens eine der beiden Labyrinth-Wandstrukturen 9a, 9b in ihrer Querschnittsebene einen Z-förmigen Verlauf, im gezeigten Beispiel gilt dies für beide Labyrinth-Wandstrukturen 9a, 9b. Vorteilhaft kann hierbei sein, wenn, wie gezeigt und aus Fig. 4 ersichtlich, bei der inneren Labyrinth-Wandstruktur 9b eine Überlappungslänge UL der beiden beteiligten Seitenwandungen 2b, 3b relativ groß ist, insbesondere größer als eine senkrecht zu den Seitenwandungen 2b, 3b gemessene Überlappungsbreite UB. Alternativ oder zusätzlich kann es von Vorteil sein, wenn, wie für die innere Labyrinth-Wandstruktur 9b gezeigt, die beteiligten Seitenwandungen 2b, 3b einander mit gleichbleibender Wanddicke überlappen, d.h. sie besitzen jeweils im Überlappungsbereich die gleiche Wanddicke wie im an den Überlappungsbereich angrenzenden Bereich und sind zu diesem Zweck zueinander in der zum Innenraum 4 hin weisenden Richtung versetzt angeordnet. Für die äußere Labyrinth-Wandstruktur 9a kann es vorteilhaft sein, wenn die Überlappung, wie gezeigt und aus Fig. 5 ersichtlich, dadurch realisiert ist, dass die beiden beteiligten Seitenwandungen 2a, 3a einander nur im Bereich zweier korrespondierender Vorsprünge 2av, 3av überlappen, die durch Reduzieren der jeweiligen Wandstärke gebildet sind. Dadurch können die beteiligten Seitenwandungen 2a, 3a im Wesentlichen außenseitig fluchtend an der äußeren Labyrinth-Wandstruktur 9a einander gegenüberliegen, was für die entsprechende Gestaltung des Außengehäuses 2 wünschenswert sein kann.

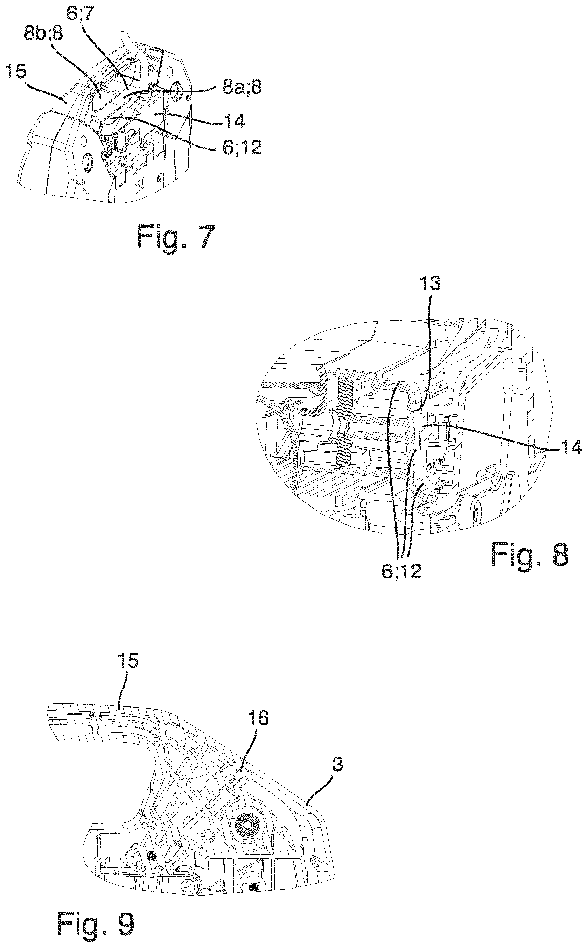

In entsprechenden Ausführungsformen weist die Wasserableitstruktur 6 eine Ableitwandstruktur 7 auf, die eine Gehäusewandstruktur 8 eines im Innenraum 4 angeordneten Bauteils 10 umfasst, wie aus den Fig. 6 und 7 ersichtlich. Diese Gehäusewandstruktur 8 beinhaltet Gehäusewandteile 8a, 8b, die in der vertikalen Gebrauchslage V oder in der horizontalen Gebrauchslage H des Akkupacks oberseitige Gehäusewandteile bilden, die von einer Trennlinie 11 in Richtung nach unten und nach außen, d.h. in Richtung vom Innenraum 4 weg, verlaufen. In den Fig. 6 und 7 ist dies speziell für die oberseitigen Gehäusewandteile 8a, 8b des Bauteils 10 in vertikaler Gebrauchslage V des Akkupacks illustriert.

Im gezeigten Beispiel handelt es sich bei dem durch diese Ableitwandstruktur 7 vor Feuchtigkeitseinflüssen bzw. Wassereintrag geschützten Bauteil 10 um ein elektrisches Bauteil, das z.B. eine Bedienfeldeinheit und/oder eine elektrische Kontaktplatteneinheit umfasst. Alternativ kann es sich um ein anderes, vorzugsweise elektrisches Bauteil handeln, das gegen eindringendes Wasser geschützt sein soll.

In entsprechenden Ausführungen beinhaltet die Wasserableitstruktur 6 zusätzlich oder alternativ zur Doppellabyrinth-Wandstruktur 9 eine flüssigkeitsoffene Labyrinth-Wandstruktur 12, die in der vertikalen Gebrauchslage V oder der horizontalen Gebrauchslage H des Akkupacks in Richtung nach unten und außen führend zwischen einem auf der Seite der Gehäusebasis 2 angeordneten elektrischen Steckanschlusskörper 13 und einem korrespondierenden Geräteanschlussstecker 14 in Einstecklage gebildet ist, d.h. dann, wenn der Geräteanschlussstecker 14 in den Steckanschlusskörper 13 eingesteckt ist. Wie insbesondere aus Fig. 8 ersichtlich, besitzt diese Labyrinth-Wandstruktur 12 im gezeigten Beispiel einen in ihrer Querschnittebene Z-förmigen Verlauf. Mit dieser Maßnahme ist speziell der elektrische Kontaktbereich von Steckanschlusskörper 13 und Geräteanschlussstecker 14 vor einem schädlichen Eindringen bzw. Verbleiben von Wasser geschützt.

In entsprechenden Ausführungen weist der Akkupack wie im gezeigten Beispiel an seiner in der vertikalen Gebrauchslage V oberen Seite ein Griffteil 15 auf, das mittels einer Nutverbindung 16 mit der Gehäusebasis 2 und/oder der Gehäusehaube 3 verbunden ist, wie insbesondere aus Fig. 9 ersichtlich. Die Nutverbindung 16 ist wassereindringsperrend ausgeführt, d.h. derart, dass sie gegen eindringendes Wasser sperrt. Dies beugt eindringendem Wasser an dieser Nahtstelle von Griffteil 15 einerseits und Gehäusebasis 2 und/oder Gehäusehaube 3 andererseits vor.

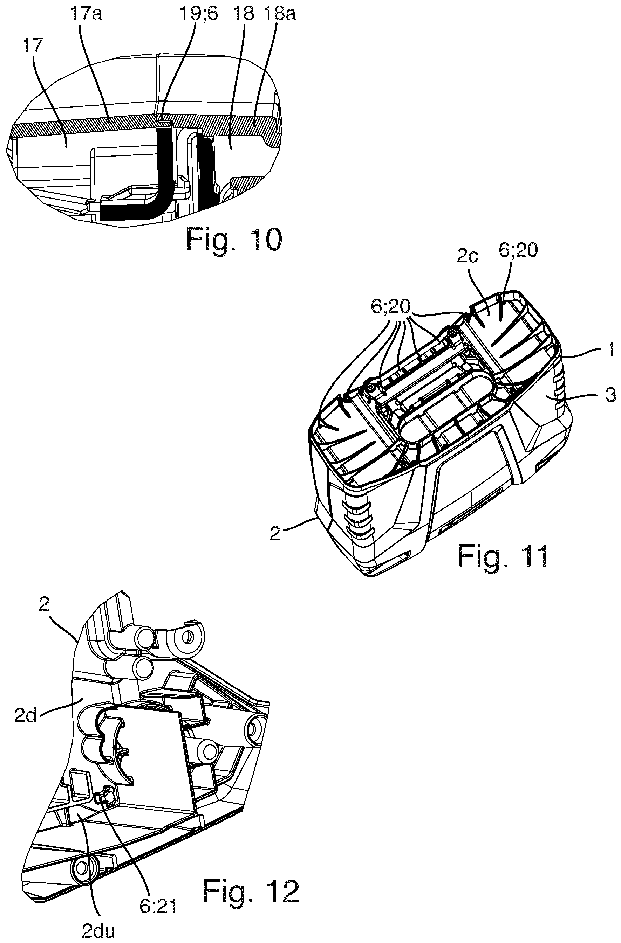

In entsprechenden Ausführungen beinhaltet der Akkupack wie im gezeigten Ausführungsbeispiel einen Bedienfeldplatinenkörper 17 mit einer Wandung 17a und einen Kontaktplattenkörper 18 mit einer Wandung 18a, zwischen denen als ein weiterer Bestandteil der Wasserableitstruktur 6 eine flüssigkeitsoffene Labyrinth-Wandstruktur 19 gebildet ist. Diese flüssigkeitsoffene Labyrinth-Wandstruktur 19 ist insbesondere aus Fig. 10 ersichtlich und stellt einen speziellen Feuchtigkeitsschutz für diese elektrischen Bauteile dar, die sich typischerweise im Innenraum 4 des Akkupacks befinden. Bei Bedarf kann die Labyrinth-Wandstruktur 19 wie gezeigt ähnlich wie die äußere Labyrinth-Wandstruktur 9a des gezeigten Ausführungsbeispiels so gestaltet sein, dass die an der Labyrinth-Wandstruktur 19 beteiligten Wandungen 17a, 18a der damit geschützten Bauteile außenseitig im Wesentlichen fluchten. Die gezeigte Labyrinth-Wandstruktur 19 kann sich beispielsweise an einer vertikalen Längsseite des Bedienfeldplatinenkörpers 17 und des Kontaktplattenkörpers 18 befinden, wenn der Akkupack in seiner vertikalen Gebrauchslage V orientiert ist.

In entsprechenden Ausführungen weist wie im gezeigten Ausführungsbeispiel die Gehäusebasis 2 eine in der vertikalen Gebrauchslage V des Akkupacks untere Bodenwandung 2c auf, und die Wasserableitstruktur 6 beinhaltet eine oder mehrere aus dem Innenraum 4 nach außen führende Wasserauslauföffnungen 20 in dieser unteren Bodenwandung 2c. Diese Wasserauslassöffnungen 20 sind beispielsweise in den Ansichten der Fig. 2 und 11 erkennbar. Sie befinden sich vorzugsweise entlang eines oder mehrerer Seitenkantenbereiche der Bodenwandung 2c. Über die Wasserauslassöffnungen 20 kann Wasser aus dem Innenraum 4 des Akkupacks nach außen, d.h. aus dem Außengehäuse 1 des Akkupacks heraus, abgeführt werden. Dies vermeidet, dass Wasser längere Zeit im Akkupack stehen bleibt bzw. sich im Innenraum 4 des Akkupacks ansammelt.

In entsprechenden Ausführungen weist die Gehäusebasis 2 eine in der vertikalen Gebrauchslage V des Akkupacks rückseitige und in der horizontalen Gebrauchslage H des Akkupacks untere Rückwandung 2d auf, die in der horizontalen Gebrauchslage H des Akkupacks nach unten geneigt verläuft. An ihrem in der horizontalen Gebrauchslage H des Akkupacks nach unten geneigten Endbereich 2du beinhaltet die Rückwandung 2d als weitere Komponente der Wasserableitstruktur 6 eine oder mehrere aus dem Innenraum 4 nach außen führende Wasserauslassöffnungen 21. Dadurch kann Wasser, das in den Innenraum 4 gelangt ist oder sich dort gebildet hat, durch die Wasserauslassöffnungen 21 in der Rückwandung 2d der Gehäusebasis 2 nach außen aus dem Akkupack heraus abgeführt werden, wenn sich der Akkupack in seiner horizontalen Gebrauchslage H befindet. Dies vermeidet eine unerwünschte Wasseransammlung im Innenraum 4 bei Verwendung des Akkupacks in der horizontalen Gebrauchslage H. Die Wasserauslassöffnungen 21 sind beispielsweise in den Darstellungen der Fig. 2 und 12 erkennbar.

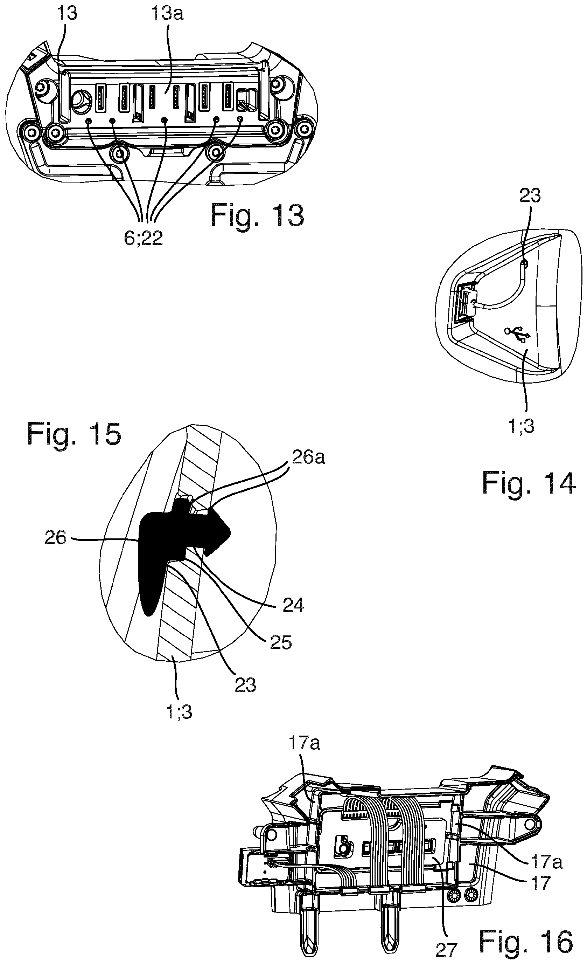

In entsprechenden Ausführungen besitzt der Akkupack wie gezeigt den bereits erwähnten elektrischen Steckanschlusskörper 13 mit einem Kontaktbuchsenkörper 13a, bei dem es sich beispielsweise um den bereits erwähnten Kontaktplattenkörper 18 handeln kann. Der Kontaktbuchsenkörper 13a weist in der gezeigten Ausführung als weitere Komponente der Wasserableitstruktur 6 eine oder mehrere Wasserableitöffnungen 22 auf. Die Wasserableitöffnungen 22 in dem Kontaktbuchsenkörper 13a sind beispielsweise aus der Darstellung von Fig. 13 ersichtlich und ermöglichen, dass eventuell in den Bereich des Kontaktbuchsenkörpers 13a gelangtes Wasser aus dem Kontaktbuchsenkörper 13a heraus bzw. von diesem weg geführt werden kann.

In entsprechenden Ausführungen besitzt der Akkupack eine durch das Außengehäuse 1 durchführende, flüssigkeitsdichte elektrische Leitungsdurchführung 23, die in den Fig. 14 und 15 gezeigt ist und eine Durchführungsöffnung 24 mit gestuftem Querschnitt 25 im Außengehäuse 1 und einen Durchführungsstopfen 26 mit einem Tannenbaumprofil 26a umfasst. Diese Gestaltung der Leitungsdurchführung 23 ist beispielsweise aus Fig. 15 zu erkennen. Das Tannenbaumprofil 26a des Durchführungsstopfens 26 ist derart auf den gestuften Querschnitt 25 der Durchführungsöffnung 24 im Außengehäuse 1 abgestimmt, dass sich ein gewünschtes fluiddichtes Verschließen der Durchführungsöffnung 24 mittels des Durchführungsstopfens 26 ergibt.

Je nach Bedarf und Anwendungsfall können weitere Feuchteschutzmaßnahmen für den Akkupack vorgesehen sein, insbesondere wobei die Feuchteschutzmaßnahmen unabhängig davon sein können, ob der Geräteanschlussstecker 14 in den Steckanschlusskörper 13 eingesteckt ist oder nicht. Dies beinhaltet beispielsweise die Maßnahme, für bestimmte Wandbereiche der Gehäusebasis 2 und/oder der Gehäusehaube 3 einen treppenförmigen Wandverlauf derart vorzusehen, dass eingedrungenes Wasser über diese Treppenwandstruktur aufgefangen und in Richtung nach außen geleitet werden kann. Generell ist es hierfür günstig, wenn solche Treppenwandstrukturen und anderweitige Wandstrukturen im Inneren des Akkupacks von Bauteiltrennungen mit Gefälle nach unten und in Richtung vom Innenraum 4 weg nach außen verlaufen, je nach Bedarf darauf abgestimmt, in welcher Gebrauchslage sich der Akkupack befindet, und/oder insbesondere unabhängig davon, ob der Geräteanschlussstecker 14 in den Steckanschlusskörper 13 eingesteckt ist oder nicht.

Fig. 16 veranschaulicht als weitere optionale Feuchtigkeitsschutzmaßnahme das Anbringen einer innenseitigen Dichtung 27 am Bedienfeldplatinenkörper 17.

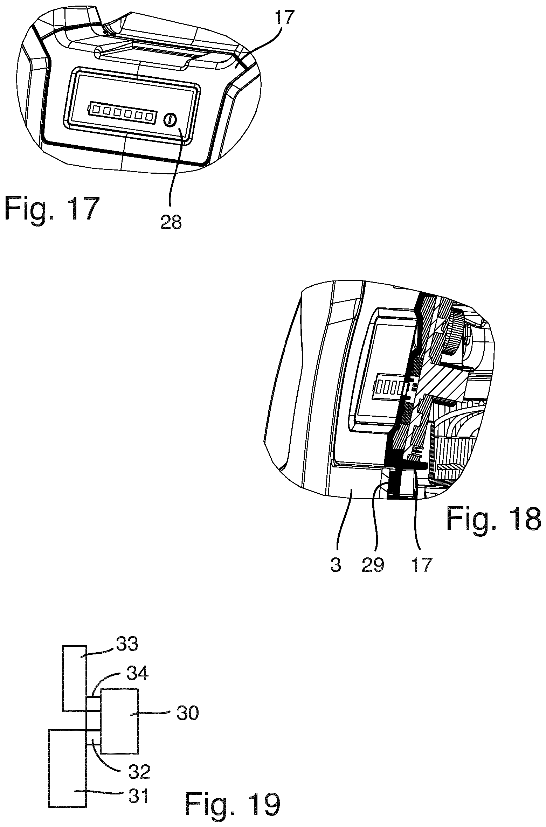

Fig. 17 veranschaulicht als weitere optionale Feuchtigkeitsschutzmaßnahme das Anbringen eines abdichtenden Klebeetiketts 28 an einer Vorderseite des Bedienfeldplatinenkörpers 17.

Fig. 18 veranschaulicht als weitere Feuchtigkeitsschutzmaßnahme das Anbringen einer Moosgummidichtung 29 zwischen Bedienfeldplatinenkörper 17 und Gehäusehaube 3. Alternativ oder zusätzlich können eine oder mehrere derartige oder andersartige Dichtungen speziell an exponierten Bereichen vorgesehen sein, die der Gefahr eindringender Feuchtigkeit unterliegen.

Fig. 19 veranschaulicht blockdiagrammatisch ein Geräteset mit einem Akkupack 30 in einer erfindungsgemäßen Ausführung. Darüber hinaus umfasst das Geräteset je nach Bedarf und Anwendungsfall ein handgeführtes Elektrogerät 31 und/oder eine Rückentragvorrichtung 33.

Bei dem Elektrogerät 31 kann es sich insbesondere um eine elektrisch angetriebenes Garten- oder Forstbearbeitungsgerät handeln, das vom Akkupack 30 elektrisch gespeist wird. Eine Koppeleinheit 32 dient zur elektrischen Kopplung des Akkupacks 30 und des Elektrogeräts 31. Optional kann die Koppeleinheit 32 zudem zur mechanischen Kopplung von Akkupack 30 und Elektrogerät 31 dienen.

Mit der Rückentragvorrichtung 33 kann der Akkupack 30 von einem Benutzer auf dem Rücken getragen werden. Eine Koppeleinheit 34 dient zur mechanischen Kopplung des Akkupacks 30 und der Rückentragvorrichtung 33. Optional kann die Koppeleinheit 34 auch eine elektrische Kopplung der Rückentragvorrichtung 33 an den Akkupack 30 bereitstellen. In Ausführungen, in denen das Geräteset sowohl das Elektrogerät 31 als auch die Rückentragvorrichtung 33 aufweist, ist der Akkupack 30 vorteilhaft dafür eingerichtet, wahlweise mechanisch mit dem Elektrogerät 31 oder mit der Rückentragvorrichtung 33 gekoppelt werden zu können. Durch entsprechende Ausführung der Koppeleinheiten 32, 34 oder einer diese umfassenden, gemeinsamen Koppeleinheit ist es je nach Bedarf möglich, das Elektrogerät direkt oder über die Rückentragvorrichtung elektrisch an den Akkupack 30 zu koppeln und/oder das Elektrogerät 31 wahlweise direkt oder über die Rückentragvorrichtung 33 mechanisch mit dem Akkupack 30 zu koppeln. Letzteres kann speziell für rückentragfähige handgeführte Elektrogeräte von Interesse sein.

Die Rückentragvorrichtung kann von herkömmlicher Art oder eine Rückentragvorrichtung sein, wie sie in der zeitgleich eingereichten europäischen Patentanmeldung mit der zugehörigen Offenlegungsschrift EP 3 622 849 A1 offenbart ist, worauf für weitere Details verwiesen werden kann.

Wie die gezeigten und oben erläuterten Ausführungsbeispiele deutlich machen, stellt die Erfindung einen Akkupack zur Verfügung, der in sehr vorteilhafter Weise vor Feuchteschäden geschützt ist, insbesondere vor Schädigungen oder Ausfällen des im Innenraum des Akkupacks aufgenommen Akkuzellenblocks. Der Akkupack lässt sich vorteilhaft in Verbindung mit einem Rückentragsystem und/oder mit handgeführten Elektrogeräten verwenden.

## Patentansprüche

1. Akkupack zur elektrischen Energieversorgung handgeführter Elektrogeräte, insbesondere elektrisch angetriebener Garten- und/oder Forstbearbeitungsgeräte, wobei der Akkupack zur wahlweisen Benutzung in einer vertikalen, insbesondere rückengetragenen, Gebrauchslage (V) oder einer horizontalen, insbesondere geräteangedockten, Gebrauchslage (H) eingerichtet ist und folgendes aufweist:
- ein Außengehäuse (1), das eine Gehäusebasis (2) und eine mit dieser verbundene Gehäusehaube (3) aufweist und einen Innenraum (4) umgibt, und
- einen im Innenraum angeordneten Akkuzellenblock (5),
**gekennzeichnet durch**
- eine Wasserableitstruktur (6) zum Ableiten von im Innenraum (4) befindlichem Wasser und/oder von Wasser, das von außen in das Außengehäuse (1) dringt, wobei
- die Wasserableitstruktur (6) an wenigstens einer Seite (1a, 1b) des Außengehäuses (1) eine flüssigkeitsoffene Doppellabyrinth-Wandstruktur (9) mit einer äußeren Labyrinth-Wandstruktur (9a), die durch Überlappung jeweils einer äußeren Seitenwandung (2a, 3a) der Gehäusebasis (2) und der Gehäusehaube (3) gebildet ist, und einer gegenüber der äußeren in einer zum Innenraum (4) hin weisenden Richtung (VR) versetzt angeordneten inneren Labyrinth-Wandstruktur (9b) aufweist, die durch Überlappung jeweils einer inneren Seitenwandung (2b, 3b) der Gehäusebasis (2) und der Gehäusehaube (3) gebildet ist, und/oder
- die Wasserableitstruktur (6) eine flüssigkeitsoffene Labyrinth-Wandstruktur (12) aufweist, die in der vertikalen oder der horizontalen Gebrauchslage (V, H) des Akkupacks in Richtung nach unten und außen führend zwischen einem auf der Seite der Gehäusebasis (2) angeordneten elektrischen Steckanschlusskörper (13) und einem korrespondierenden Geräteanschlussstecker (14) in Einstecklage gebildet ist.

2. Akkupack nach Anspruch 1, weiter **dadurch gekennzeichnet, dass** die Wasserableitstruktur (6) eine Ableitwandstruktur (7) aufweist, die eine Gehäusewandstruktur (8) eines im Innenraum angeordneten Bauteils (10) umfasst, wobei die Gehäusewandstruktur (8) in der vertikalen oder in der horizontalen Gebrauchslage (V, H) des Akkupacks oberseitige Gehäusewandteile (8a, 8b) beinhaltet, die von einer Trennlinie (11) der Gehäusewandteile (8a, 8b) in Richtung nach unten und außen verlaufen.

3. Akkupack nach Anspruch 1 oder 2, weiter **dadurch gekennzeichnet, dass** die innere Labyrinth-Wandstruktur (9b) gegenüber der äußeren Labyrinth-Wandstruktur (9a) zusätzlich in einer Querrichtung (QR) versetzt angeordnet ist, die senkrecht zu der zum Innenraum (4) hin weisenden Richtung ist.

4. Akkupack nach einem der Ansprüche 1 bis 3, weiter **dadurch gekennzeichnet, dass** er an seiner in der vertikalen Gebrauchslage oberen Seite ein Griffteil (15) aufweist, das mittels einer wassereindringsperrenden Nutverbindung (16) mit der Gehäusebasis (2) und/oder der Gehäusehaube (3) verbunden ist.

5. Akkupack nach einem der Ansprüche 1 bis 4, weiter **dadurch gekennzeichnet, dass** er einen Bedienfeldplatinenkörper (17) und einen Kontaktplattenkörper (18) beinhaltet und die Wasserableitstruktur (6) eine flüssigkeitsoffene Labyrinth-Wandstruktur (19) aufweist, die zwischen dem Bedienfeldplatinenkörper (17) und dem Kontaktplattenkörper (18) gebildet ist.

6. Akkupack nach einem der Ansprüche 1 bis 5, weiter **dadurch gekennzeichnet, dass** die Gehäusebasis (2) eine in der vertikalen Gebrauchslage des Akkupacks untere Bodenwandung (2c) aufweist und die Wasserableitstruktur (6) eine oder mehrere aus dem Innenraum (4) nach außen führende Wasserauslassöffnungen (20) in der Bodenwandung (2c) aufweist.

7. Akkupack nach einem der Ansprüche 1 bis 6, weiter **dadurch gekennzeichnet, dass** die Gehäusebasis (2) eine in der vertikalen Gebrauchslage rückseitige und in der horizontalen Gebrauchslage untere Rückwandung (2d) aufweist, die in der horizontalen Gebrauchslage nach unten geneigt verläuft, und die Wasserableitstruktur (6) eine oder mehrere aus dem Innenraum (4) nach außen führende Wasserauslassöffnungen (21) in der Rückwandung (2d) an ihrem in der horizontalen Gebrauchslage nach unten geneigten Endbereich (2du) aufweist.

8. Akkupack nach einem der Ansprüche 1 bis 7, weiter **dadurch gekennzeichnet, dass** er einen elektrischen Steckanschlusskörper (13) mit einem Kontaktbuchsenkörper (13a) beinhaltet und die Wasserableitstruktur (6) eine oder mehrere Wasserableitöffnungen (22) in dem Kontaktbuchsenkörper (13a) aufweist.

9. Akkupack nach einem der Ansprüche 1 bis 8, weiter **gekennzeichnet durch** eine durch das Außengehäuse (1) durchführende, flüssigkeitsdichte elektrische Leitungsdurchführung (23), die eine Durchführungsöffnung (24) mit gestuftem Querschnitt (25) im Außengehäuse (1) und einen Durchführungsstopfen (26) mit einem Tannenbaumprofil (26a) aufweist.

10. Akkupack nach einem der Ansprüche 1 bis 9, weiter **dadurch gekennzeichnet, dass** bei mindestens einer der beiden Labyrinth-Wandstrukturen (9a, 9b) der Doppellabyrinth-Wandstruktur (9) eine Überlappungslänge (UL) der beiden beteiligten Seitenwandungen (2b, 3b) größer als eine dazu senkrechte Überlappungsbreite (UB) ist.

11. Akkupack nach einem der Ansprüche 1 bis 10, weiter **dadurch gekennzeichnet, dass** bei mindestens einer der beiden Labyrinth-Wandstrukturen (9a, 9b) der Doppellabyrinth-Wandstruktur (9) die beiden beteiligten Seitenwandungen (2b, 3b) einander mit gleichbleibender Wanddicke überlappen.

12. Geräteset mit einem Akkupack (30) nach einem der Ansprüche 1 bis 11 und mit einem handgeführten Elektrogerät (31), insbesondere einem elektrisch angetriebenen Garten- oder Forstbearbeitungsgerät, und einer Koppeleinheit (32) zur mindestens elektrischen Kopplung des Akkupacks (30) und des Elektrogeräts (31).

13. Geräteset, insbesondere nach Anspruch 12, mit einem Akkupack (30) nach einem der Ansprüche 1 bis 11 und mit einer Rückentragvorrichtung (33) und einer Koppeleinheit (34) zur mindestens mechanischen Kopplung des Akkupacks (30) und der Rückentragvorrichtung (33).

## Claims

1. Rechargeable battery pack for supplying electrical energy to hand-held power tools, preferably electrically powered gardening and/or forestry tools, wherein the rechargeable battery pack is configured for selective use in a vertical, preferably worn on the back, use position (V) or a horizontal, preferably docked on a tool, use position (H) and comprises the following:
- an external housing (1) which comprises a housing base (2) and a housing hood (3) connected to the housing base and which surrounds an interior space (4), and
- a rechargeable battery cell block (5) which is arranged in the interior space,
**characterized by**
- a water discharge structure (6) for discharging at least one of water contained in the interior space (4) and water which enters the external housing (1) from outside, wherein
- the water discharge structure (6) comprises, on at least one side (1a, 1b) of the external housing (1), a double-labyrinth wall structure (9) which is open to liquid and has an outer labyrinth wall structure (9a), which is formed by overlapping of an outer side wall (2a) of the housing base (2) and an outer side wall (3a) of the housing hood (3), and an inner labyrinth wall structure (9b), which is arranged offset in relation to the outer labyrinth wall structure in a direction (VR) facing the interior space (4) and which is formed by overlapping of an inner side wall (2b) of the housing base (2) and an inner side wall (3b) of the housing hood (3), respectively, and/or
- the water discharge structure (6) comprises a labyrinth wall structure (12) which is open to liquid and, in the vertical or the horizontal use position (V, H) of the rechargeable battery pack, is formed, in a manner leading in a direction downwards and to the outside, between an electrical plug-in connection body (13), which is arranged on the side of the housing base (2), and a corresponding tool connection plug (14) in a plugged-in position.

2. Rechargeable battery pack according to Claim 1, wherein the water discharge structure (6) comprises a discharge wall structure (7) which includes a housing wall structure (8) of a component (10) which is arranged in the interior space, wherein the housing wall structure (8) contains, in the vertical or in the horizontal use position (V, H) of the rechargeable battery pack, top-side housing wall parts (8a, 8b) which run, in a direction downwards and to the outside, from a separating line (11) of the top-side housing wall parts (8a, 8b).

3. Rechargeable battery pack according to Claim 1 or 2, wherein the inner labyrinth wall structure (9b) is additionally arranged offset in relation to the outer labyrinth wall structure (9a) in a transverse direction (QR) which is perpendicular in relation to the direction which faces the interior space (4).

4. Rechargeable battery pack according to any of Claims 1 to 3, further comprising, on its side which is at the top in the vertical use position, a grip part (15) which is connected to at least one of the housing base (2) and the housing hood (3) by means of a groove connection (16) which blocks the ingress of water.

5. Rechargeable battery pack according to any of Claims 1 to 4, further comprising an operator control panel circuit board body (17) and a contact plate body (18), wherein the water discharge structure (6) comprises a labyrinth wall structure (19) which is open to liquid and is formed between the operator control panel circuit board body (17) and the contact plate body (18).

6. Rechargeable battery pack according to any of Claims 1 to 5, wherein the housing base (2) comprises a bottom wall (2c) which is at the bottom in the vertical use position of the rechargeable battery pack, and the water discharge structure (6) comprises one or more water outlet openings (20) in the bottom wall which lead from the interior space (4) to the outside.

7. Rechargeable battery pack according to any of Claims 1 to 6, wherein the housing base (2) comprises a rear wall (2d) which is on the rear side in the vertical use position and at the bottom in the horizontal use position and which runs, in the horizontal use position, in a manner inclined downwards, and the water discharge structure (6) comprises one or more water outlet openings (21), which lead from the interior space (4) to the outside, in the rear wall (2d) at its end region (2du) which is inclined downwards in the horizontal use position.

8. Rechargeable battery pack according to any of Claims 1 to 7, further comprising an electrical plug-in connection body (13) with a contact socket body (13a), and the water discharge structure (6) comprises one or more water discharge openings (22) in the contact socket body (13a).

9. Rechargeable battery pack according to any of Claims 1 to 8, further comprising a liquid-tight electrical line bushing (23) which is routed through the external housing (1) and which has a bushing opening (24) with a stepped cross section (25) in the external housing (1) and a bushing plug (26) with a Christmas tree profile (26a).

10. Rechargeable battery pack according to any of Claims 1 to 9, wherein, in at least one of the two labyrinth wall structures (9a, 9b) of the double-labyrinth wall structure (9), an overlap length (UL) of the two side walls (2b, 3b) involved is greater than an overlap width (UB) which is perpendicular thereto.

11. Rechargeable battery pack according to any of Claims 1 to 10, wherein, in at least one of the two labyrinth wall structures (9a, 9b) of the double-labyrinth wall structure (9), the two side walls (2b, 3b) involved overlap one another with a constant wall thickness.

12. Tool set comprising a rechargeable battery pack (30) according to any of Claims 1 to 11 and comprising a handheld power tool (31), preferably an electrically powered gardening or forestry tool, and a coupling unit (32) for at least electrically coupling the rechargeable battery pack (30) and the power tool (31).

13. Tool set, preferably according to Claim 12, comprising a rechargeable battery pack (30) according to any of Claims 1 to 11 and comprising a harness device (33) and a coupling unit (34) for at least mechanically coupling the rechargeable battery pack (30) and the harness device (33).

## Revendications

1. Bloc batterie pour l'alimentation en énergie électrique d'appareils électriques portatifs, notamment d'appareils de jardinage et/ou de sylviculture à entraînement électrique, le bloc batterie étant adapté pour être utilisé au choix dans une position d'utilisation verticale (V), notamment portée sur le dos, ou dans une position d'utilisation horizontale (H), notamment amarrée à l'appareil, et présentant les éléments suivants :
- un boîtier extérieur (1), qui présente une base de boîtier (2) et un capot de boîtier (3) relié à celle-ci et entoure un espace intérieur (4), et
- un bloc d'accumulateurs (5) agencé dans l'espace intérieur,
**caractérisé par**
- une structure d'évacuation d'eau (6) pour évacuer de l'eau se trouvant dans l'espace intérieur (4) et/ou de l'eau qui pénètre dans le boîtier extérieur (1) depuis l'extérieur,
- la structure d'évacuation d'eau (6) présentant, sur au moins un côté (1a, 1b) du boîtier extérieur (1), une structure de paroi en double labyrinthe ouverte aux liquides (9) avec une structure de paroi en labyrinthe extérieure (9a), qui est formée par chevauchement respectivement d'une paroi latérale extérieure (2a, 3a) de la base de boîtier (2) et du capot de boîtier (3), et une structure de paroi en labyrinthe intérieure (9b) agencée en décalage par rapport à la structure extérieure dans une direction (VR) orientée vers l'espace intérieur (4), qui est formée par chevauchement respectivement d'une paroi latérale intérieure (2b, 3b) de la base de boîtier (2) et du capot de boîtier (3), et/ou
- la structure d'évacuation d'eau (6) présentant une structure de paroi en labyrinthe (12) ouverte aux liquides qui, dans la position d'utilisation verticale ou horizontale (V, H) du bloc batterie, est formée en menant en direction du bas et de l'extérieur entre un corps de raccordement par enfichage électrique (13) agencé sur le côté de la base de boîtier (2) et une fiche de raccordement d'appareil correspondante (14) en position d'enfichage.

2. Bloc batterie selon la revendication 1, **caractérisé en outre en ce que** la structure d'évacuation d'eau (6) présente une structure de paroi d'évacuation (7) qui comprend une structure de paroi de boîtier (8) d'un composant (10) agencé dans l'espace intérieur ; dans la position d'utilisation verticale ou horizontale (V, H) du bloc batterie, la structure de paroi de boîtier (8) contenant des parties de paroi de boîtier supérieures (8a, 8b) qui s'étendent en direction du bas et de l'extérieur depuis une ligne de séparation (11) des parties de paroi de boîtier (8a, 8b).

3. Bloc batterie selon la revendication 1 ou 2, **caractérisé en outre en ce que** la structure de paroi en labyrinthe intérieure (9b) est en outre agencée en décalage par rapport à la structure de paroi en labyrinthe extérieure (9a) dans une direction transversale (QR) qui est perpendiculaire à la direction orientée vers l'espace intérieur (4).

4. Bloc batterie selon l'une quelconque des revendications 1 à 3, **caractérisé en outre en ce qu'**il présente, sur son côté supérieur dans la position d'utilisation verticale, une partie de préhension (15) qui est reliée à la base de boîtier (2) et/ou au capot de boîtier (3) au moyen d'une liaison par rainure (16) empêchant la pénétration d'eau.

5. Bloc batterie selon l'une quelconque des revendications 1 à 4, **caractérisé en outre en ce qu'**il contient un corps de carte de panneau de commande (17) et un corps de plaque de contact (18) et la structure d'évacuation d'eau (6) présente une structure de paroi en labyrinthe ouverte aux liquides (19), qui est formée entre le corps de carte de panneau de commande (17) et le corps de plaque de contact (18).

6. Bloc batterie selon l'une quelconque des revendications 1 à 5, **caractérisé en outre en ce que** la base de boîtier (2) présente une paroi de fond inférieure (2c) dans la position d'utilisation verticale du bloc batterie et la structure d'évacuation d'eau (6) présente une ou plusieurs ouvertures de sortie d'eau (20) dans la paroi de fond (2c) menant vers l'extérieur de l'espace intérieur (4).

7. Bloc batterie selon l'une quelconque des revendications 1 à 6, **caractérisé en outre en ce que** la base de boîtier (2) présente une paroi arrière (2d) du côté arrière dans la position d'utilisation verticale et inférieure dans la position d'utilisation horizontale, qui s'étend de manière inclinée vers le bas dans la position d'utilisation horizontale, et la structure d'évacuation d'eau (6) présente une ou plusieurs ouvertures de sortie d'eau (21) dans la paroi arrière (2d), menant vers l'extérieur de l'espace intérieur (4), dans sa zone d'extrémité (2du) inclinée vers le bas dans la position d'utilisation horizontale.

8. Bloc batterie selon l'une quelconque des revendications 1 à 7, **caractérisé en outre en ce qu'**il contient un corps de raccordement par enfichage électrique (13) avec un corps de borne de contact femelle (13a) et la structure d'évacuation d'eau (6) présente une ou plusieurs ouvertures d'évacuation d'eau (22) dans le corps de borne de contact femelle (13a).

9. Bloc batterie selon l'une quelconque des revendications 1 à 8, **caractérisé en outre par** un passage de ligne électrique (23) étanche aux liquides, traversant le boîtier extérieur (1), qui présente une ouverture de passage (24) à section transversale étagée (25) dans le boîtier extérieur (1) et un bouchon de passage (26) avec un profil en sapin (26a).

10. Bloc batterie selon l'une quelconque des revendications 1 à 9, **caractérisé en outre en ce que**, pour au moins l'une des deux structures de paroi en labyrinthe (9a, 9b) de la structure de paroi en double labyrinthe (9), une longueur de chevauchement (UL) des deux parois latérales (2b, 3b) concernées est supérieure à une largeur de chevauchement (UB) perpendiculaire à celle-ci.

11. Bloc batterie selon l'une quelconque des revendications 1 à 10, **caractérisé en outre en ce que**, dans au moins l'une des deux structures de paroi en labyrinthe (9a, 9b) de la structure de paroi en double labyrinthe (9), les deux parois latérales (2b, 3b) concernées se chevauchent avec une épaisseur de paroi constante.

12. Ensemble d'appareil avec un bloc batterie (30) selon l'une quelconque des revendications 1 à 11 et avec un appareil électrique portatif (31), notamment un appareil de jardinage ou de sylviculture à entraînement électrique, et une unité de couplage (32) pour le couplage au moins électrique du bloc batterie (30) et de l'appareil électrique (31).

13. Ensemble d'appareil, notamment selon la revendication 12, avec un bloc batterie (30) selon l'une quelconque des revendications 1 à 11 et avec un dispositif de port dorsal (33) et une unité de couplage (34) pour le couplage au moins mécanique du bloc batterie (30) et du dispositif de port dorsal (33).
